# DEMANDE DE BREVET EUROPEEN

(11) **EP 4 706 399 A1**
(43) Date de publication de la demande: **11.03.2026**
(21) Numéro de dépôt: 25200465.0
(22) Date de dépôt: 05.09.2025
(51) Int. Cl.: A23J 1/04, A23J 1/10, A23J 3/30, A23K 20/147, A23K 50/20

(54) **HYDROLYSAT DE PROTEINES DE POISSONS POUR LE DEVELOPPEMENT MUSCULAIRE DU POULAIN ET DU CHEVAL**

(30) Priorité: 06.09.2024 FR 2409459
(71) Demandeur: Agromousquetaires, 75015 Paris (FR)
(72) Inventeur: DRIEU LA ROCHELLE, Hubert, 75015 Paris (FR)
(74) Mandataire: Cabinet Le Guen Maillet

(57) **Abrégé**

La présente invention concerne l'utilisation d'un hydrolysat de protéines provenant de tissus ou cartilages de poissons, riches en collagène, pour favoriser le développement de la masse musculaire ou maintenir la masse musculaire du cheval ou du poulain. Selon l'invention l'hydrolysat présente une fraction protéique présentant un profil moléculaire de répartition suivante :
- entre 15 et 60 % de peptides de poids moléculaire compris entre 1000 et 5000 Da,
- entre 20 et 40% de peptides de poids moléculaire compris entre 500 et 1000 Da,
- entre 10 et 40% de peptides de poids moléculaire compris entre 150 et 500 Da,
- entre 1 et 10% de peptides de poids moléculaire inférieur à 150 Da.

## Description

### DOMAINE TECHNIQUE

La présente invention se situe dans le domaine du bien-être animal et concerne l'utilisation d'un hydrolysat de protéines provenant de tissus ou cartilages de poissons riches en protéines, en particulier en collagène, pour favoriser la croissance et le développement du poulain, maintenir ou renforcer la masse musculaire des chevaux ou des poulains et améliorer leur apparence physique.

### ÉTAT DE LA TECHNIQUE ANTÉRIEUR

Après sa naissance, le poulain présente une croissance et un développement rapide. Lors des premiers mois, il est nourri de lait maternel. Vers l'âge de trois à quatre mois, lors de la période de sevrage, l'alimentation des poulains est enrichie en aliments solides. Entre un et deux ans la croissance ralentie. Ils atteignent enfin leur taille adulte entre quatre et cinq ans.

Durant cette période de croissance et de développement, la prise de poids doit être régulière afin de garantir un développement optimum, en particulier de garantir un Gain Moyen Quotidien (GMQ) optimum. Le GMQ, exprimé en en kilogrammes par jours, est un indicateur de croissance utilisé dans le domaine de l'élevage des animaux.

Pour le développement de la masse musculaire, l'alimentation est un facteur clé. Les fibres musculaires sont composées de protéines. Un cheval a donc besoin de protéines pour développer ses muscles. C'est pourquoi il est intéressant de compléter la ration alimentaire de l'animal par une source de protéines en particulier une source présentant un profil d'acides aminés adapté au développement musculaire.

Chez le cheval adulte, le maintien de l'état musculaire et son renforcement sont également indispensables. Chez les chevaux de courses notamment, les muscles sont particulièrement sollicités. Des exercices réguliers et un apport alimentaire adapté aident au maintien ou au renforcement de la masse musculaire.

### EXPOSÉ DE L'INVENTION

Qu'il s'agisse de poulains en pleine croissance ou de chevaux adultes de compétition sportive ou de loisir, le développement musculaire, son renforcement, son maintien, ou encore l'apparence physique sont des facteurs essentiels. En effet, l'état physique de l'animal, incluant son poids, sa taille, la qualité de son poil, sont des indicateurs de son état de santé ou des critères de sélection. Dans certains cas, il peut être nécessaire de stimuler ou renforcer le développement de la masse musculaire et augmenter le GMQ, afin de soutenir ou favoriser la croissance et le développement du poulain ou d'aider le cheval adulte à récupérer après l'effort et à augmenter ses capacités sportives telles que sa vitesse de course ou sa puissance.

Le but de la présente invention est ainsi de proposer une solution naturelle et efficace pour stimuler ou aider la croissance et le développement du poulain, développer, maintenir ou renforcer la masse musculaire des poulains ou des chevaux, favoriser ou améliorer leur apparence physique, améliorer la récupération du cheval après l'effort et renforcer ou maintenir ses capacités sportives.

A cet effet, l'invention concerne l'utilisation d'un hydrolysat de protéines de tissus ou de cartilages riches en collagène de poisson, ou d'une composition en comprenant, ledit hydrolysat présentant une fraction protéique présentant un profil moléculaire de répartition suivante :
- entre 15 et 60 % de peptides de poids moléculaire compris entre 1000 et 5000 Da,
- entre 20 et 40% de peptides de poids moléculaire compris entre 500 et 1000 Da,
- entre 10 et 40% de peptides de poids moléculaire compris entre 150 et 500 Da,
- entre 1 et 10% de peptides de poids moléculaire inférieur à 150 Da,
et un aminogramme dans lequel, en pourcentage du poids total des acides aminés:
- la teneur en acide glutamique est comprise entre 10 et 14%
- la teneur en valine est comprise entre 1,5 et 3,5%
- la teneur en isoleucine est comprise entre 1 et 3%
- la teneur en leucine est comprise entre 2 et 6%
- la teneur en glycine est comprise entre 9 et 13%
- la teneur en lysine est comprise entre 0,5 et 3%
- la teneur en arginine est comprise entre 6 et 10%,
pour favoriser la croissance et le développement d'un poulain, maintenir, développer ou renforcer la masse musculaire d'un cheval ou d'un poulain, améliorer l'apparence physique d'un cheval ou d'un poulain.

Dans le cadre de l'invention on entend par « croissance », l'augmentation du poids vif avec l'âge. Elle s'exprime en Gain Moyen Quotidien, en kilogrammes par jour.

On entend par « développement », l'atteinte progressive de l'état adulte résultant de modifications de la conformation, de la composition chimique et des fonctions des différents tissus et régions corporelles.

On entend par « cheval » l'animal ayant atteint l'âge adulte et par « poulain » l'animal en cours de croissance.

L'hydrolysat selon l'invention est un mélange de peptides et acides aminés libres obtenu après hydrolyse enzymatique, à l'aide d'une enzyme spécifique, de matières premières provenant de poissons, telles que les peaux de poisson et les cartilages. Ces matières étant riches en collagène, les peptides et acides aminés libres qui composent l'hydrolysat sont principalement issus de collagène.

L'hydrolysat selon l'invention se montre ainsi particulièrement efficace pour stimuler le développement musculaire des poulains en croissance, favorisant ainsi leur croissance et développement et pour renforcer la masse musculaire des chevaux à l'âge adulte.

On notera d'ailleurs que l'hydrolysat selon l'invention est avantageusement riche en acides aminés précurseurs de l'hormone de croissance tels que l'arginine, la valine, l'acide glutamique, la lysine et les acides aminés à longue chaine BCAA c'est-à-dire la leucine, l'isoleucine et la valine. L'hormone de croissance augmente le volume musculaire, accroit la densité osseuse et diminue la synthèse de graisse.

Ainsi, avantageusement, l'utilisation selon l'invention inclut l'augmentation du gain moyen quotidien du poulain ou du cheval.

Avantageusement encore, l'utilisation selon l'invention inclut l'amélioration de l'état du poil, en particulier l'amélioration de la brillance.

Avantageusement encore, l'utilisation selon l'invention inclut l'amélioration de la récupération du cheval ou du poulain après l'effort et l'augmentation de ses capacités sportives.

Avantageusement, l'hydrolysat présente, de plus :
- une teneur en matière grasse inférieure à 0,5 % en pourcentage en poids d'extrait sec,
- une teneur en matière azotée totale (N * 6,25) supérieure à 90 %, en pourcentage en poids d'extrait sec,
- une teneur en matière minérale inférieure à 10 %, en pourcentage en poids d'extrait sec.

Préférentiellement, l'aminogramme présente, de plus, en pourcentage du poids total des acides aminés :
- une teneur en acide aspartique est comprise entre 7 et 10%
- une teneur en proline est comprise entre 7 et 11%
- une teneur en thréonine est comprise entre 2 et 5%
- une teneur en sérine est comprise entre 3 et 7%
- une teneur en alanine est comprise entre 8 et 12%
- une teneur en cystine est comprise entre 0,1 et 1%
- une teneur en méthionine est comprise entre 1,5 et 3%
- une teneur en tyrosine est comprise entre 0,5 et 2 ,5%
- une teneur en phénylalanine est comprise entre 1 et 3,5%
- une teneur en histidine est comprise entre 3,5 et 7%
- une teneur en hydroxyproline est comprise entre 4 et 8%
- une teneur en hydroxylysine est comprise entre 0,5 et 2,5%.

L'hydrolysat utilisé dans le cadre de l'invention est obtenu par digestion enzymatique à l'aide d'une enzyme endopeptidase d'origine bactérienne, avantageusement une endoprotéase d'origine bactérienne commercialisée sous la marque Corolase 7089 commercialisée par la société AB enzymes.

En particulier l'hydrolysat peut être obtenu par un procédé comprenant les étapes de :
- préparation d'une source de protéines à partir de tissus et/ou cartilages de poisson riches en collagène,
- préparation d'une solution aqueuse enzymatique comprenant entre 0,1 et 0,5%, en poids, d'une enzyme endoprotéase,
- hydrolyse enzymatique de ladite source de protéines à une température comprise entre 40 et 60°C, pendant 1 à 5 heures, après l'ajout de la solution enzymatique,
- arrêt de l'hydrolyse enzymatique par chauffage à une température d'au moins 90°C durant 8 à 20 minutes,
- séparation de l'hydrolysat de protéines des autres composants,
- récupération et concentration de l'hydrolysat de protéines.

Avantageusement, le rapport, en volume, source de protéines/eau est inférieur ou égal à 1.

Préférentiellement, le tissu est de la peau.

Préférentiellement, le poisson est un Salmonidae, préférentiellement du saumon ou de la truite, ou encore un poisson blanc.

Dans le cade de l'invention, l'hydrolysat de protéines peut se trouver inclus dans une composition. Celle-ci peut se présenter sous toute forme connue et adaptée à l'alimentation des poulains ou des chevaux, telle qu'une solution, une composition solide telle qu'un comprimé, une poudre ou une gélule, un granule ou encore un gel. La composition peut comprendre tout excipient adapté, et tout autre composé tel que des vitamines, des minéraux, des actifs, des conservateurs, des colorants.

Avantageusement, l'hydrolysat, ou la composition en contenant, sont administrés aux poulains ou chevaux à raison de 20 à 30 g d'hydrolysat par jour et pour 100kg de poids vif, pour un hydrolysat présentant un extrait sec entre 20 et 30 % en poids. Lorsqu'il s'agit d'un poulain en période de croissance, l'administration se fait préférentiellement entre l'âge de 1 et 2 ans.

Partant du dosage journalier nécessaire, l'homme du métier saura formuler une composition adaptée à un tel dosage.

Les caractéristiques de l'invention mentionnées ci-dessus, ainsi que d'autres, apparaîtront plus clairement à la lecture des exemples qui suivent et en lien avec le dessin joint suivant :

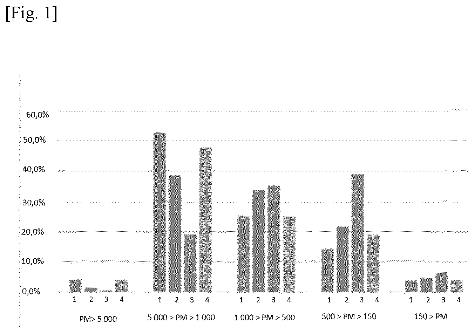

[Fig. 1] est diagramme représentant la répartition des peptides par classes d'un hydrolysat de protéines selon l'invention, en fonction de leurs poids moléculaire.

### EXEMPLES

### Exemple 1 : obtention d'hydrolysats de protéines de peaux de saumon selon l'invention

Quatre hydrolysats de protéines de peaux de saumon ont été préparés selon le procédé selon l'invention suivant :
- Mélange de peaux de saumon avec 1 volume d'eau contenant 0,2 %, en poids, d'enzyme Corolase 7089^{®}
- Hydrolyse enzymatique durant 1 à 5 H à une température de 40 à 60°C,
- Inactivation de l'enzyme par chauffage à une température d'au moins 90°C durant 8 à 20 minutes,
- Tamisage sur tamis de 300 µm afin d'éliminer les résidus d'hydrolyse,
- Centrifugation du jus d'hydrolyse 10 à 15 min à 4700 tr/min pour séparer l'huile, les insolubles et l'hydrolysat de protéines,
- Concentration de l'hydrolysat.

Le Tableau 1 indique les caractéristiques des hydrolysats.

**[TAB. 1]**

| **Paramètres** | **Composition extrait sec** |
|---|---|
| Extrait sec (%) | 100 % |
| Protéines totales (N*6,25) | >90% |
| Matières grasses | < 0,5 % |
| Matières minérales | <10% |

La répartition des poids moléculaires des quatre hydrolysats est comme ci dessos et est illustrée à la Figure 1.
- entre 15 et 60 % de peptides de poids moléculaire compris entre 1000 et 5000 Da,
- entre 20 et 40% de peptides de poids moléculaire compris entre 500 et 1000 Da,
- entre 10 et 40% de peptides de poids moléculaire compris entre 150 et 500 Da,
- entre 1 et 10% de peptides de poids moléculaire inférieur à 150 Da.

Le profil en acide aminé (aminogramme) est tel que décrit précédemment.

### Exemple 2 : évaluation sur poulains

Un hydrolysat selon l'exemple 1 a été administré à cinq poulains d'âge situé entre 1 et 2 ans, à raison de 25g/j/ 100kg de poids vif pendant 50 à 60 jours. Le Gain Moyen Quotidien (GMQ, en kg/jours) ainsi que l'apparence du poil ont été évalués et comparés à ceux de poulains témoins n'ayant pas reçu l'hydrolysat.

Il a été observé que l'administration de l'hydrolysat selon l'invention permettait d'obtenir des gains moyens quotidiens de 10% supérieurs par rapport aux témoins. La note d'état corporel (NEC), une grille d'évaluation de référence établie par l'IFCE (Institut Français du Cheval et de l'Equitation), qui consiste à évaluer la masse des dépôts adipeux à partir d'observations visuelles et de palpations de zones anatomiques comprenant les côtes, l'arrière de l'épaule, le garrot, le bord supérieur de l'encolure, l'attache de queue et la croupe, est améliorée de 1 à 2 points en moyenne pour passer de 2 à 3, voire à 4 (sur 5 points au total).

Par ailleurs, il a été noté un état du poil bien meilleur chez les poulains ayant reçu l'hydrolysat, en particulier une brillance visiblement plus prononcée.

### Exemple 3 : évaluation sur chevaux adultes

Un hydrolysat selon l'exemple 1 a été administré à des chevaux adultes amaigris, à raison de 25 g/j/100kg de poids vif pendant 13 jours. Il a été constaté 1 kg de Gain Moyen Quotidien (GMQ, en kg/jours).

## Revendications

1. Utilisation d'un hydrolysat de protéines de tissus ou de cartilages riches en collagène de poisson, ou composition en comprenant, ledit hydrolysat présentant une fraction protéique présentant un profil moléculaire de répartition suivante:
- entre 15 et 60 % de peptides de poids moléculaire compris entre 1000 et 5000 Da,
- entre 20 et 40% de peptides de poids moléculaire compris entre 500 et 1000 Da,
- entre 10 et 40% de peptides de poids moléculaire compris entre 150 et 500 Da,
- entre 1 et 10% de peptides de poids moléculaire inférieur à 150 Da,
et un aminogramme dans lequel, en pourcentage, en poids total des acides aminés:
- la teneur en acide glutamique est comprise entre 10 et 14%,
- la teneur en valine est comprise entre 1,5 et 3,5%
- la teneur en isoleucine est comprise entre 1 et 3%,
- la teneur en leucine est comprise entre 2 et 6%,
- la teneur en glycine est comprise entre 9 et 13%,
- la teneur en lysine est comprise entre 0,5 et 3%,
- la teneur en arginine est comprise entre 6 et 10% ,
pour favoriser la croissance et le développement du poulain, maintenir, développer ou renforcer la masse musculaire du cheval ou du poulain, améliorer l'apparence physique du cheval ou du poulain.

2. Utilisation selon la revendication 1, pour l'augmentation du gain moyen quotidien du poulain ou du cheval.

3. Utilisation selon la revendication1, pour l'amélioration de l'état du poil, en particulier pour l'amélioration de la brillance.

4. Utilisation selon l'une des revendications précédentes, **caractérisé en ce que** l'hydrolysat présente, de plus :
- une teneur en matière grasse inférieure à 0,5 % en pourcentage en poids d'extrait sec,
- une teneur en matière azotée totale (N * 6,25) supérieure à 90 %, en pourcentage en poids d'extrait sec,
- une teneur en matière minérale inférieure à 10 %, en pourcentage en poids d'extrait sec.

5. Utilisation selon l'une des revendications précédentes, **caractérisé en ce que** l'aminogramme présente, de plus, en pourcentage en poids total des acides aminés :
- une teneur en acide aspartique est comprise entre 7 et 10%
- une teneur en proline est comprise entre 7 et 11%
- une teneur en thréonine est comprise entre 2 et 5%
- une teneur en sérine est comprise entre 3 et 7%
- une teneur en alanine est comprise entre 8 et 12%
- une teneur en cystine est comprise entre 0,1 et 1 %
- une teneur en méthionine est comprise entre 1,5 et 3%
- une teneur en tyrosine est comprise entre 0,5 et 2 ,5%
- une teneur en phénylalanine est comprise entre 1 et 3,5%
- une teneur en histidine est comprise entre 3,5 et 7%
- une teneur en hydroxyproline est comprise entre 4 et 8%
- une teneur en hydroxylysine est comprise entre 0,5 et 2,5%.

6. Utilisation selon l'une des revendications précédentes, caractérisé en ce ledit tissu est de la peau.

7. Utilisation selon l'une des revendications précédentes, caractérisé en ce ledit poisson est un Salmonidae, préférentiellement du saumon ou de la truite, ou un poisson blanc.

8. Utilisation selon l'une des revendications précédentes, **caractérisé en ce que** l'hydrolysat est obtenu par digestion enzymatique à l'aide d'une enzyme endopeptidase d'origine bactérienne, préférentiellement l'enzyme commercialisée sous la marque Corolase 7089.
